(19) **Europäisches Patentamt**

**European Patent Office**

**Office européen des brevets**

(11) **EP 1 703 301 A1**

(12) **EUROPEAN PATENT APPLICATION**
published in accordance with Art. 158(3) EPC

(43) Date of publication:
**20.09.2006 Bulletin 2006/38**

(51) Int Cl.:
***G01T 1/20*** (2006.01)

(21) Application number: **04724729.1**

(22) Date of filing: **31.03.2004**

(86) International application number:
**PCT/JP2004/004590**

(87) International publication number:
**WO 2004/090571 (21.10.2004 Gazette 2004/43)**

(84) Designated Contracting States:
**DE FR GB NL**

(30) Priority: **10.04.2003 JP 2003106277**

(71) Applicant: **Japan Science and Technology Agency**
**Kawaguchi-shi,**
**Saitama 332-0012 (JP)**

(72) Inventors:
• **SHIBUYA, Kengo**
**Fuchu-shi, Tokyo 1830045 (JP)**

• **MURAKAMI, Hidetoshi**
**Matsudo-shi, Chiba 2710044 (JP)**
• **SAITO, Haruo**
**Shinagawa-ku, Tokyo 1400002 (JP)**
• **ASAI, Keisuke**
**Sendai-shi,**
**Miyagi 9800861 (JP)**

(74) Representative: **Wilson Gunn**
**Chancery House,**
**Chancery Lane**
**London WC2A 1QU (GB)**

(54) **RADIATION DETECTOR**

(57) A gamma ray detector having a very high time resolution. By using CsBr (cesium bromide) as a scintillator crystal and a MCP built-in photoelectron multiplier tube as a photoelectron multiplier, much larger time resolution are obtained in detecting gamma rays than conventional detectors.

Fig. 3

**Description**

Technical Field

The present invention relates to a detection device for radiations particularly gamma rays, more particularly, to a gamma ray detection device having a very high time resolution.

Prior Art

Radiation detectors are used for the optical detection and measurement of ionizing radiations, taking advantage of a radiant relaxation phenomenon of solids. In recent years, a short pulsed radiation is being utilizing in the fields of physics, chemistry, organism, medical treatment etc. Thus, there is demanded a process of simply measuring such a short pulsed radiation. For example, in PET (Positron Emission Tomography) which is a medical instrument, it is possible to apply the time resolving performances of a radiation detector to the detection of the position of a measurement system. Then, the higher time resolution is, the narrower diagnoses can be conducted in a shorter time. Thus, there is a very large demand for radiation detectors of the high time resolution type.

For conventional radiation detectors, the time resolution of particularly gamma ray detectors was not completely satisfactory.

For example, the best three time resolution have been obtained up to now, the first being 124 ps measured according to a process of time-treating gamma rays with the use of a plastic scintillator and a diode amplification-type photoelectron multiplier tube (M.Moszynski, 1993, Nuclear Instruments and Methods in Physics Research A 337 (1993) 154), the second being 155 ps measured according to a process of using a $BaF_2$ scintillator, a diode amplification-type photoelectron multiplier tube and a digital oscilloscope (Nuclear Instruments and Methods in Physics Research A 487 (2002) 612 - 617), and the third being 120 ps measured according to a process of using a plastic scintillator, a diode amplification-type photoelectron multiplier tube and a digital oscilloscope (Radiation Physics and Chemistry 68 (2003) 431 - 434).

On the other hand, the high-speed light emission from CsBr (cesium bromide) is known to research workers of optical properties from around the 1990 time (J PHYS SOC JPN 62:(8) 2904 - 2914 AUG 1993), and its emission amount, attenuation time and temperature dependence were measured (J PHYS SOC JPN 66:(8)2502 - 212 AUG 1997). As shown in Table 1, at room temperature, the light emission amount was 1% of the high-speed component of $BaF_2$ (0.04% of NaI (TI)) and the attenuation time was 30 picoseconds. It was known, thus, that the light emission amount at room temperature is very small but the attenuation time is very rapid.

Table 1

|  | Light emission amount (NaI (TI)ratio) | Attenuation time |
|---|---|---|
| CsBr (room temperature) | 0.04% | 30ps |
| $BaF_2$ | 4% | 800ps |

However, there have been no attempts to apply a CsBr crystal to the measurement of gamma rays.

MCP built-in photoelectron multiplier tubes having characteristic high speed properties are commercially available from around the 1980. Table 2 shows a comparison of a MCP built-in photoelectron multiplier tube with a conventional photoelectron multiplier tube. The MCP built-in photoelectron multiplier tube is characterized in that it is small in rise time of a wave form and also in transit time spread (T.T.S.).

Table 2

|  | Rise time | Half bandwidth |
|---|---|---|
| MCP built-in photoelectron multiplier (Hamamatsu photonics R3809U) | 150ps | 25ps |
| Conventional high-speed photoelectron multiplier (Hamamatsu photonics H3378) | 700ps | 370ps |

When using a conventional photoelectron multiplier tube and a conventional gamma ray high-speed measurement scintillator ($BaF_2$ or a plastic scintillator), the time resolution is determined by a statistical scatter in number of photoelectrons on the photosurface and is almost not affected by the rise time and transit time spread. However, when the time measurement of gamma rays is conducted with the use of a MCP built-in photoelectron multiplier tube and a conventional high-speed gamma ray measurement scintillator, only a small number of photoelectrons can be used so that this lead to a large statistical scatter. Further, poorer time resolution are obtained than those of conventional photoelectron multiplier tubes. Thus, they have not been used for the time measurement of gamma rays.

Problems to be solved by the Invention

Conventional gamma ray detectors were unsatisfactory in their time resolution. Therefore, they were restricted in the following use applications:

(1) PET (Positron Emission Tomography) in medical treatments

If the time resolution is enhanced, it is possible to detect the position of a positron from time information. This results in the alleviation in burden of a patients such as a reduction in measurement time, a decrease in strength of a line source, etc.

(2) Positron Lifetime Measurements

In material sciences, the lifetime measurement of a positron is utilized for the detection of a lattice defect. If the time resolution is enhanced, the detection sensitivity is improved.

In order to dissolve these restrictions, the present invention intends to improve the time resolution for detection of gamma rays.

Means to solve the Problems

The inventors have now found that much larger time resolution can be obtained than prior art values in the detection of gamma rays by using CsBr (cesium bromide) as a scintillator crystal for converting gamma rays to a light and also a MCP built-in photoelectron multiplier tube as a photoelectron multiplier tube for converting a light to an electric signal, and attained the present invention.

That is, the present invention is a radiation detection device comprising a CsBr crystal as a scintillator and a photoelectron multiplier tube for receiving a light from the scintillator, wherein the photoelectron multiplier tube detects a light of a wavelength of from 300 to 500 nm, and has a sensitivity permitting the detection of a single-photon, a half bandwidth of 30 ps or less relative to the single-photon and a light-receiving area of 10 mm$^2$ or more. The attenuation time of this scintillator is 50 ps or less.

Brief Description of the Drawing

Fig.1 shows a MCP built-in photoelectron multiplier tube and its specifications (a pamphlet of Hamamatsu Photonics K.K.), which can be used in the present invention.

Fig.2 shows the structure of a MCP built-in photoelectron multiplier tube (Hamamatsu Photonics R 3809 U, from a pamphlet of Hamamatsu Photonics K.K.).

Fig.3 is a diagram showing a measurement apparatus used in the working example of the present invention.

Fig.4 shows the results of the measurement. The abscissa axis represents channels (times), and the ordinate axis represents counts. Position A represents measurement values before movement, and Position B represents measurement values after movement.

Embodiments of the Invention

The radiation detection device of the present invention uses a CsBr crystal as a scintillator, and uses also a photoelectron multiplier tube for receiving a light from the scintillator.

The CsBr crystal used in the present invention may be any of crystals included in such a classification. High purity alkali halide crystals containing CsBr are commercially provided for optical use applications from the 1960' s. The present invention can use such alkali halide crystals.

The components of these compounds are Cs (cesium) and Br (bromine) in an atom ratio of 1:1. It is preferred to use those of a crystal structure of the CsCl type.

The CsBr crystals emit a light of from 300 to 500 nm when radiated with radiations particularly gamma rays. In order to receive this radiation light, a photoelectron multiplier tube is used.

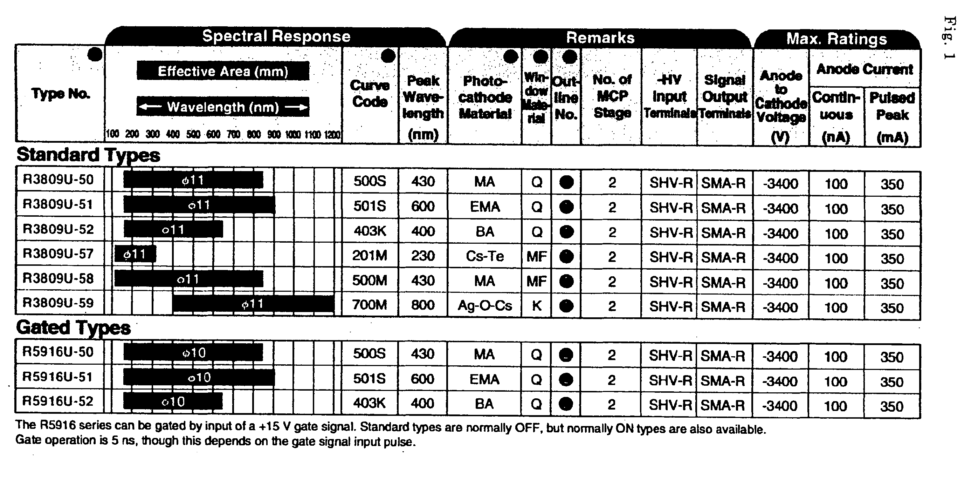

Photoelectron multiplier tubes are composed of a photosurface for converting a light to an electron, and an amplification section for amplifying the electron. On the other hand, a MCP (microchannel plate) is an element comprising a glass having fine holes (channels) formed therein. When its both surfaces are applied with a voltage (several kV), the electron incident from the negative voltage side impinges against the wall of a channel to release a secondary electron which is then amplified. A MCP built-in photoelectron multiplier tube is a photoelectron multiplier tube in which such an element is built whereby the detection of a single-photon is allowed and the response time bacomes rapid. Such a MCP built-in photoelectron multiplier tube is commercially avalable, for example, as R 3809 U series or R 5916 U series from Hamamatsu Photonics K.K. Their specifications are shown in Fig.1.

The radiation detection device of the present invention may use, in addition to the above CsBr crystal and photoelectron multiplier tube, a combination of these components with an apparatus (es) having specifications suitably necessary for the detection of radiations. For example, the CsBr crystal and MCP built-in photoelectron multiplier tube can be combined with a digital oscilloscope. This digital oscilloscope may be operated with an external trigger circuit. Further, for the treatment of the detected wave form, a known apparatus can be used according to necessity.

For the measurement of this radiation detection device, the subject to be measured is preferably positron exhaustion gamma rays. The line sources include C - 11, N - 13, O - 15, F - 18 etc. which are used in PET, and Na - 22, G - 68 etc. which are used in the positron lifetime measurement.

The following example illustrates the present invention. However, it does not intend in any way to restrict the present invention.


Example 1


Measurement device


A CsBr crystal (Korth Kristalle manufactured by GMBH) was used as a scintillator. Its components are Cs and Br in an atom ratio of 1:1. The crystal structure is of the CsCl type. The size is 8 mm $\phi \times$ 8 mm. It is a polished article.

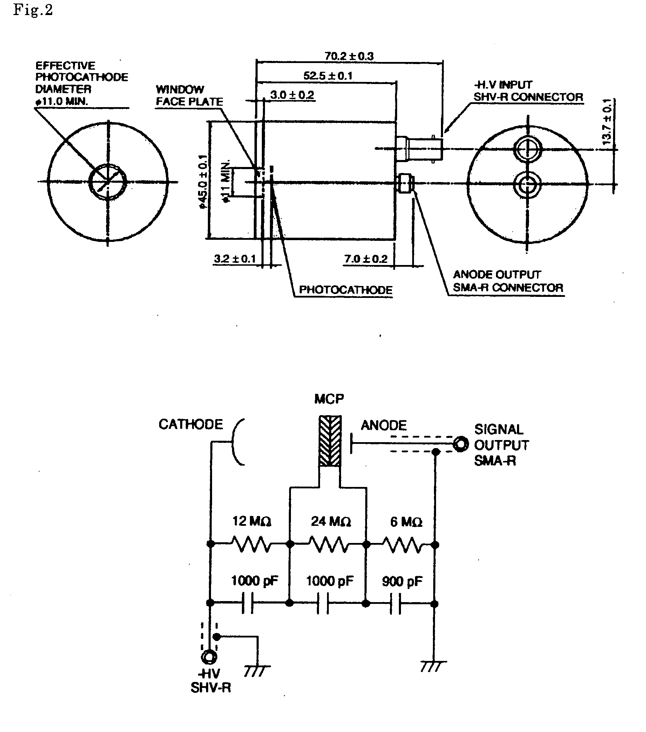

A MCP built-in photoelectron multiplier tube (R 3809 U manufactured by Hamamatsu Photonics K.K.) was used as a photoelectron multiplier tube. Its rise time is 150 ps and transit time spread is 25 ps. Its structure is shown in Fig. 2. Referring to Fig.2, CATHODE is a photosurface wherein a lihgt is converted to an electron which then comes in MCP for amplification, after which it comes out from ANODE.

This CsBr crystal was coated over its entire surface with a silicone grease, and thereafter covered with a light protection tape with the exception of a surface to be sticked to a photoelectron multipulier tube. Then, the covered CsBr crystal was directly sticked to the light-receiving surface of the photoelectron multipulier tube to make a radiation detection device.

As a line source, $^{22}$Na (available from Japan Isotope Association; manufactured by PerkinElmer Lifescience) was used. The strength was 1 MBq. From $^{22}$Na, a 1.27 MeV gamma ray and a positron were released at the same time. The positron changes immediately into two 0.511MeV gamma rays. At this set-up, the effect of the 1.27 MeV gamma ray can be ignored. The size of the light source is about 2 mm.

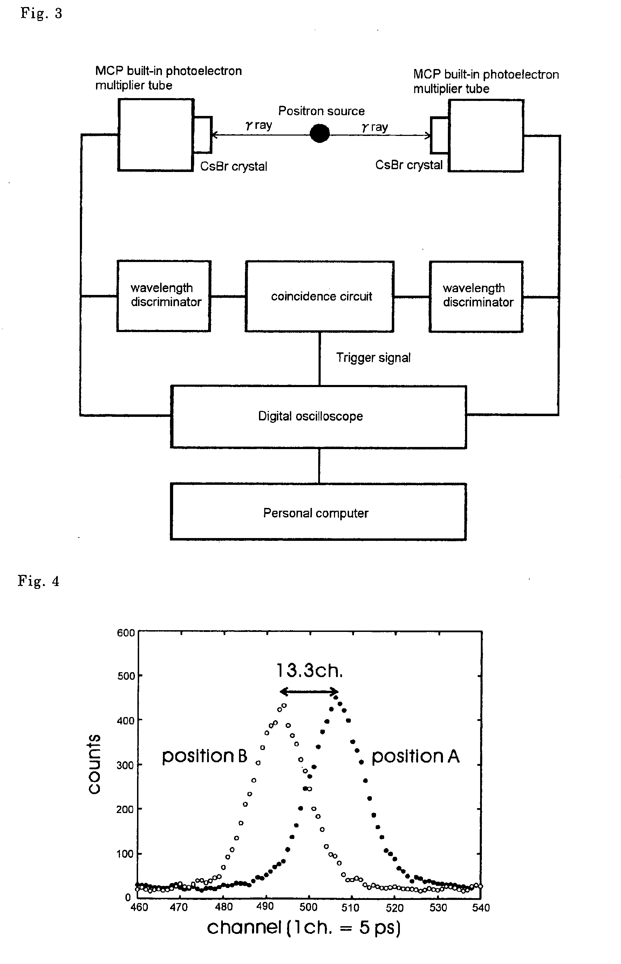

These units were disposed as shown in Fig.3. Two radiation detection devices were provided, and disposed such that their CsBr crystals oppose to each other. The photoelectron multipulier tube, CsBr crystals and the line sources were arranged on the same axis. The distance between the surfaces of CsBr crystals of two radiation detection devices was 50 mm.

As shown in Fig.3, they were connected to a digital oscilloscope (Wave Master 9600 manufactured by LeCroy; the analog band 6 GHz, the sampling frequency 20 GS/s (2 ch simultaneous)), a waveheight discriminator (Model 584 manufactured by EG & GORTEC) and a coincidence circuit (RPN - 130 manufactured by Rinei Seiki) to measure a difference of the times when two photoelectron multiplier tubes receive a light. As a result of the use of the decices thus disposed, the time resolution was 80 ps or less and the distance desolving power was about 12 mm.


Measurement operation


First, a line source (size:about 2 mm) was placed at a position of 20 mm apart from the CsBr crystal of one radiation detection device to measure a radiation from the light source. The time between the points was 5 ps, and so the width of the position of the ordinate axis (counts) at the half from the top was 16 points or less. That is, a value of 80 ps or less was obtained as the time resolution (half bandwidth) of time- difference measurement of two photoelectron extinction gamma rays (0.511 MeV, simultaneous).

Then, the light source was moved 10 mm towards the CsBr crystal of other radiation detection device and then the same mesuerment was conducted.


Measurement results


The measurement results are shown in Fig.4. By the movement of 10 mm, the positron source approachs 10 mm towards the right detector so that it separates 10 mm away from the left detector. It is seen from Fig.4 that, before and after this movement, the peak shifts 13.3 channels (that is, 66.6 ps).

The light velocity is 3 cm/100 ps, and so it is anticipated that the peak position shifts 66 ps only. This anticipation was well in accordance with the above measurement results.

That is, for the time measurement of a position extinction gamma ray (0.511 MeV) and gamma rays exhibiting similar energies, there is provided a device having a high time resolution not obtainable in the prior art.

It can be read from Fig.4 that the time resolution at Position A (or Position B) is a half bandwidth of approximately 15 ch (75 ps). This value is a sum of the attenuation time of a scintillator used, and the half bandwidth in time resolution, the difference in optical path, and other adverse effects on the time resolution of a photoelectron multiplier tube used.

From this value, the attenuation time of a CsBr scintillator used can be determined as follows:

The attenuation time (half-life period) of a scintillator used is termed $\tau s$, the time resolution of a measuring instrument is termed $\tau p$, and the light path difference and other effects given to time jitters are termed $\tau k$. The time resolution of the entire is a square root of the sum of the square of $\tau s$, $\tau p$ and $\tau k$, and therefore the following equation is obtained.

$$\text{Time Resolution} = \sqrt{2\tau_s^2 + 2\tau_p^2 + 2\tau_k^2}$$

The light side is 75 ps from Fig.4. The $\tau p$ is 25 ps from the catalog value. The $\tau k$ is estimated to be 25 ps from the size of a crystal. Thus, the $\tau s$ is 43 ps. It is seen that this substantilly corresponds to the document value (30 ps, Table 1) of CrBr.

According to the present invention, thus, it is obvious that a higher time resolution can be obtained by using a scintillator having a very short attenuation time.

**Claims**

1. A radiation detection device comprising a CsBr crystal as a scintillator and a photoelectron multiplier tube for receiving a light from the scintillator, wherein the photoelectron multiplier tube detects a light of a wavelength of from 300 to 500 nm, and has a sensitivity permitting the detection of a single-photon, a half bandwidth of 30 ps or less relative to the single-photon and a light-receiving area of 10 mm$^2$ or more.

2. The radiation detection device of claim 1, which is for detecting gamma rays.

3. The radiation detection device of claim 1 or 2 wherein the CsBr crystal has a CsCl type crystal structure and the Cs:Br atom ratio is about 1:1.

4. The radiation detection device of any one of claims 1 to 3 wherein the scintillator has an attenuation time of 50 ps or less.

5. The radiation detection device of any one of claims 1 to 4 wherein the photoelectron multiplier tube is a MCP built-in photoelectron multiplier tube.

Fig. 1

EP 1 703 301 A1

| Type No. | Spectral Response | | Curve Code | Peak Wave-length (nm) | Photo-cathode Material | Win-dow Mate-rial | Out-line No. | No. of MCP Stage | -HV Input Terminals | Signal Output Terminals | Anode to Cathode Voltage (V) | Anode Current | |
|---|---|---|---|---|---|---|---|---|---|---|---|---|---|
| | Effective Area (mm) | | | | | | | | | | | Contin-uous (nA) | Pulsed Peak (mA) |
| | ← Wavelength (nm) → | | | | | | | | | | | | |
| | 100 200 300 400 500 600 700 800 900 1000 1100 1200 | | | | | | | | | | | | |

**Standard Types**

| Type No. | Spectral Response | Curve Code | Peak Wave-length (nm) | Photo-cathode Material | Win-dow Mate-rial | Out-line No. | No. of MCP Stage | -HV Input Terminals | Signal Output Terminals | Anode to Cathode Voltage (V) | Contin-uous (nA) | Pulsed Peak (mA) |
|---|---|---|---|---|---|---|---|---|---|---|---|---|
| R3809U-50 | ø11 | 500S | 430 | MA | Q | ● | 2 | SHV-R | SMA-R | -3400 | 100 | 350 |
| R3809U-51 | ø11 | 501S | 600 | EMA | Q | ● | 2 | SHV-R | SMA-R | -3400 | 100 | 350 |
| R3809U-52 | ø11 | 403K | 400 | BA | Q | ● | 2 | SHV-R | SMA-R | -3400 | 100 | 350 |
| R3809U-57 | ø11 | 201M | 230 | Cs-Te | MF | ● | 2 | SHV-R | SMA-R | -3400 | 100 | 350 |
| R3809U-58 | ø11 | 500M | 430 | MA | MF | ● | 2 | SHV-R | SMA-R | -3400 | 100 | 350 |
| R3809U-59 | ø11 | 700M | 800 | Ag-O-Cs | K | ● | 2 | SHV-R | SMA-R | -3400 | 100 | 350 |

**Gated Types**

| Type No. | Spectral Response | Curve Code | Peak Wave-length (nm) | Photo-cathode Material | Win-dow Mate-rial | Out-line No. | No. of MCP Stage | -HV Input Terminals | Signal Output Terminals | Anode to Cathode Voltage (V) | Contin-uous (nA) | Pulsed Peak (mA) |
|---|---|---|---|---|---|---|---|---|---|---|---|---|
| R5916U-50 | ø10 | 500S | 430 | MA | Q | ● | 2 | SHV-R | SMA-R | -3400 | 100 | 350 |
| R5916U-51 | ø10 | 501S | 600 | EMA | Q | ● | 2 | SHV-R | SMA-R | -3400 | 100 | 350 |
| R5916U-52 | ø10 | 403K | 400 | BA | Q | ● | 2 | SHV-R | SMA-R | -3400 | 100 | 350 |

The R5916 series can be gated by input of a +15 V gate signal. Standard types are normally OFF, but normally ON types are also available.
Gate operation is 5 ns, though this depends on the gate signal input pulse.

Fig.2

EFFECTIVE
PHOTOCATHODE
DIAMETER
φ11.0 MIN.

WINDOW
FACE PLATE

70.2 ± 0.3

52.5 ± 0.1

3.0 ± 0.2

-H.V INPUT
SHV-R CONNECTOR

13.7 ± 0.1

φ45.0 ± 0.1

φ11 MIN.

3.2 ± 0.1

7.0 ± 0.2

PHOTOCATHODE

ANODE OUTPUT
SMA-R CONNECTOR

MCP

CATHODE

ANODE

SIGNAL
OUTPUT
SMA-R

12 MΩ        24 MΩ        6 MΩ

1000 pF      1000 pF      900 pF

-HV
SHV-R

Fig. 3

Fig. 4

| | INTERNATIONAL SEARCH REPORT | International application No. |
|---|---|---|
| | | PCT/JP2004/004590 |

**A. CLASSIFICATION OF SUBJECT MATTER**
Int.Cl$^7$  G01T1/20

According to International Patent Classification (IPC) or to both national classification and IPC

**B. FIELDS SEARCHED**

Minimum documentation searched (classification system followed by classification symbols)
Int.Cl$^7$  G01T1/00-7/12

Documentation searched other than minimum documentation to the extent that such documents are included in the fields searched

| | | | |
|---|---|---|---|
| Jitsuyo Shinan Koho | 1922–1996 | Toroku Jitsuyo Shinan Koho | 1994–2004 |
| Kokai Jitsuyo Shinan Koho | 1971–2004 | Jitsuyo Shinan Toroku Koho | 1996–2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2000-249768 A  (Hamamatsu Photonics Kabushiki Kaisha), <br> 14 September, 2000 (14.09.00), <br> Full text; Figs. 1 to 14 <br> (Family: none) | 1-5 |
| Y | HAMAMATSU PHOTONICS KABUSHIKI KAISHA, <br> MICROCHANNEL PLATE PHOTOMULTIPLIER TUBE(MCP-PMTs) <br> R3809U-50 SERIES, 2002 | 1-5 |
| Y | HAMAMATSU PHOTONICS KABUSHIKI KAISHA, GATEABLE <br> MICROCHANNEL PLATE PHOTOMULTIPLIER TUBE(MCP-PMTs) <br> R5916U-50 SERIES, 1998 | 1-5 |

| ☐ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 29 June, 2004 (29.06.04) | 13 July, 2004 (13.07.04) |

| Name and mailing address of the ISA/ | Authorized officer |
|---|---|
| Japanese Patent Office | |
| Facsimile No. | Telephone No. |

Form PCT/ISA/210 (second sheet) (January 2004)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M.MOSZYNSKI.** *Nuclear Instruments and Methods in Physics Research A,* 1993, vol. 337, 154
- *Nuclear Instruments and Methods in Physics Research A,* 2002, vol. 487, 612-617
- *Radiation Physics and Chemistry,* 2003, vol. 68, 431-434
- *J PHYS SOC JPN,* August 1993, vol. 62 (8), 2904-2914
- *J PHYS SOC JPN,* August 1997, vol. 66 (8), 2502-212